## Europäisches Patentamt
## European Patent Office
## Office européen des brevets

(19)

(11) Numéro de publication: **0 195 878**
**B1**

(12) **FASCICULE DE BREVET EUROPEEN**

(45) Date de publication du fascicule du brevet:
**14.06.89**

(51) Int. Cl.⁴: **F 26 B 15/12, C 04 B 33/30**

(21) Numéro de dépôt: **85830073.4**

(22) Date de dépôt: **25.03.85**

(54) Séchoir rapide pour céramique, spécialement pour carreaux en céramique, à plusieurs chambres et transporteur continu à plusieurs niveaux, avec chargement et déchargement des produits, simultanément à chaque niveau, un à un et suivant un cycle continu.

(43) Date de publication de la demande:
**01.10.86 Bulletin 86/40**

(45) Mention de la délivrance du brevet:
**14.06.89 Bulletin 89/24**

(84) Etats contractants désignés:
**AT BE CH DE FR GB IT LI LU NL SE**

(56) Documents cités:
**DE-A- 2 033 355**
**DE-A- 2 418 358**
**FR-A- 2 310 850**
**GB-A- 2 137 183**
**US-A- 1 567 023**
**US-A- 1 587 419**
**US-A- 2 573 355**
**US-A- 4 016 986**

(73) Titulaire: **GABBRIELLI IMPIANTI di Gabbrielli F. & C. s.a.s., Via del Soderello 104, I-50019 Sesto F.no (Firenze) (IT)**

(72) Inventeur: **Taverna, Andrea, Via del Soderello 104, I-50019 Sesto Fiorentino (Firenze) (IT)**

(74) Mandataire: **Martini, Lazzaro, Ufficio Brevetti Ing. Lazzaro Martini Via Brunelleschi, 1, I-50123 Firenze (IT)**

### Description

L'invention concerne un séchoir rapide, conçu spécialement pour des carreaux en céramique, comprenant au moins deux chambres situées côte à côte, communicantes entre elles horizontalement et pourvues d'un transporteur continu à plusieurs voies horizontales, superposées, c'est-à-dire à plusieurs niveaux, et sur lequel le chargement des produits dans la première chambre et le déchargement dans la dernière chambre ont lieu en même temps pour chaque niveau dudit transporteur continu et dans le même ordre que les divers niveaux.

On sait que les séchoirs rapides pour céramique actuellement connus sont essentiellement de quatre types: en tunnel à un seul niveau, en tour, en «L» et en «anneau» et que dans tous ces systèmes, l'air est à la fois l'élément de séchage et le support thermiquze. D'autre part, lesdits séchoirs rapides connus présentent quelques graves inconvénients. Ils ont en effet un coût élevé et un encombrement notable, étant donné que le séchoir à tunnel a toujours un développement horizontal d'environ 60 à 70 mètres, que celui en tour a une hauteur supérieure à 5 m et pouvant aller jusqu'à 12 m, tandis que ceux en «L» ou en «anneau» ont un premier tronc vertical d'une hauteur de 4 à 5m et un second tronc horizontal, uni au premier, d'une longueur de 15 à 20 m.

On connaît en outre, d'après le brevet DE-A-2 033 355 un dispositif de séchage de produits sanitaires en céramique, en particulier des cuvettes de toilettes ou de lavabos, qui comprend au moins un tunnel composé de plusieurs chambres contigues horizontalement et associées alternativement à de moyens d'alimentation transversale en air chaud de séchage et d'aspiration transversale et d'évacuation de l'air consommé froid qui vient de traverser longitudinalement la chambre corrtespondante; plusieurs transporteurs continus horizontaux, superposés, étendus auxdites chambres d'une extrémité à l'autre du tunnel, pourvus de moyens d'actionnements séparés et actionnés un à un, successivement au moyen d'un programme; et des moyens de chargement et de déchargement des produits prévus aux extrémités dudit tunnel et mobiles verticalement de manière à pouvoir être disposés en relation avec ledit programme en regard du transporteur qui à chaque fois est mis en fonction.

Un tel dispositif présente essentiellement les inconvenients suivants: un coût, un encombrement (en particulier en longueur) et une complexité de réalisation et de fonctionnement élevés en raison de la multiplicité des moyens d'actionnement des divers transporteurs et des moyens d'animation de l'air chaud de séchage en circuit ouvert.

On connaît par ailleurs, d'après le brevet DE-A-2 418 358, un dispositif d'animation de l'air chaud de séchage pour séchoir en tunnel à un seul niveau, constitué de conduits d'air disposés dans les parois latérales du tunnel, en communication avec l'intérieur dudit tunnel et pourvu chacun de plusieurs ventilateurs aspirants/refoulants régulièrement répartis le long du conduit et décalés longitudinalement par rapport à ceux de l'autre paroi, de manière à faire suivre à l'air chaud introduit à l'éxtrémité en aval du tunnel, un parcours en zigzag d'une paroi à l'autre transversalement jusqu'à l'extrémité en amont du tunnel.

Un tel dispositif présente néanmoins, de par sa consception en tunnel, un encombrement important (de l'ordre de 130 mètres), essentiellement dû au fait que le même air de séchage (éventuellement additionné d'air chaud durant le parcours) est transmis tout au long du tunnel réduisant ainsi sa capacité de séchage, un coût et un temps de séchage (17 heures) relativement élevés.

Le but principal de la présente invention est d'éliminer ces inconvénients en proposant un séchoir continu avec plusieurs étages indépendants et un seul dispositif de chargement, déchargement des produits actionnés de manière cyclique et un système d'animation de l'air chaud de séchage qui permette de réduire considérablement l'encombrement, en particulier la longueur, la complexité mécanique et le temps de séchage, et par conséquent les coûts de fabrication et de fonctionnement.

On est parvenu à ce résultat conformément à l'invention en adoptant l'idée consistant à utiliser un séchoir pour céramique, spécialement pour carreaux en céramique, comprenant plusieurs chambres contigues horizontalement, avec un transporteur continu à plusieurs voies à rouleaux horizontales, superposées, c'est-à-dire à plusieurs niveaux étendus auxdites chambres et dont les niveaux sont mis en fonction seulement un à un, successivement de manière cyclique, des moyens pour le chargement, déchargement des produits, au regard du niveau du transporteur qui à chaque fois est mis en fonction, une installation pour l'animation de l'air chaud de séchage, traversant les chambres transversalement caractérisé par le fait que ledit air de séchage est conduit en circuit fermé traversant les chambres (3, 4) avec un parcours en zigzag, et par le fait que ledit rouleaux, qui sortent d'une des parois des chambres, ont des extrémités profilées à fourchette pour permettre leur animation au moyen de disques reliés à des arbres moteurs correspondants, montés sur un support.

Les avantages obtenus grâce à la présente invention consistent essentiellement dans le fait que le temps de séchage peut être limité à environ 30 min; que la surface d'encombrement de l'installation peut être contenue dans les limites de 6 m sur 2,5 et son hauteur à 4 m 5; qu'il est possible de régler la température de l'air et le rapport température/humidité en relation avec le type de produit et de materiau à sécher; que le fonctionnement est tout à fait automatique, offrant un degré de sécurité et de fiabilité très élevé même après une longue période d'utilisation ininterrompue.

L'invention est décrite plus en détail ci-dessous, et à l'aide des dessins qui représentent un exemple d'exécution.

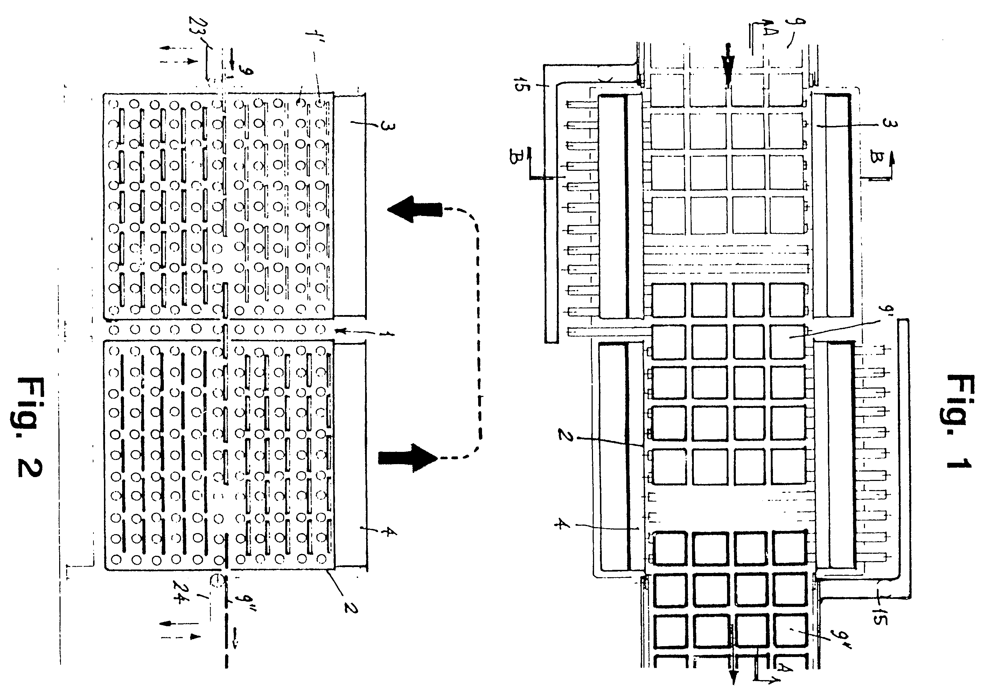

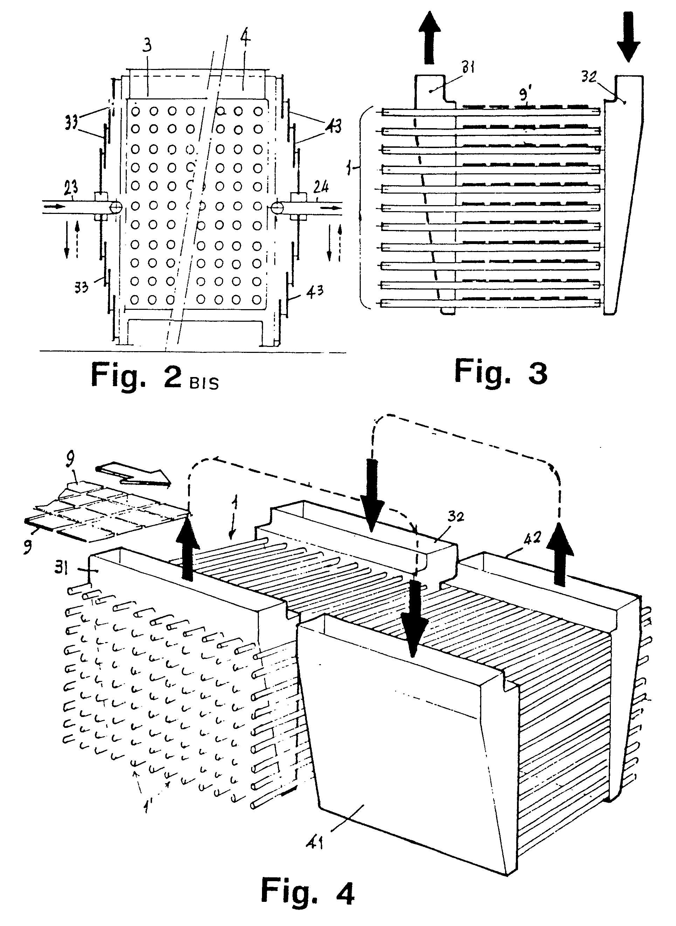

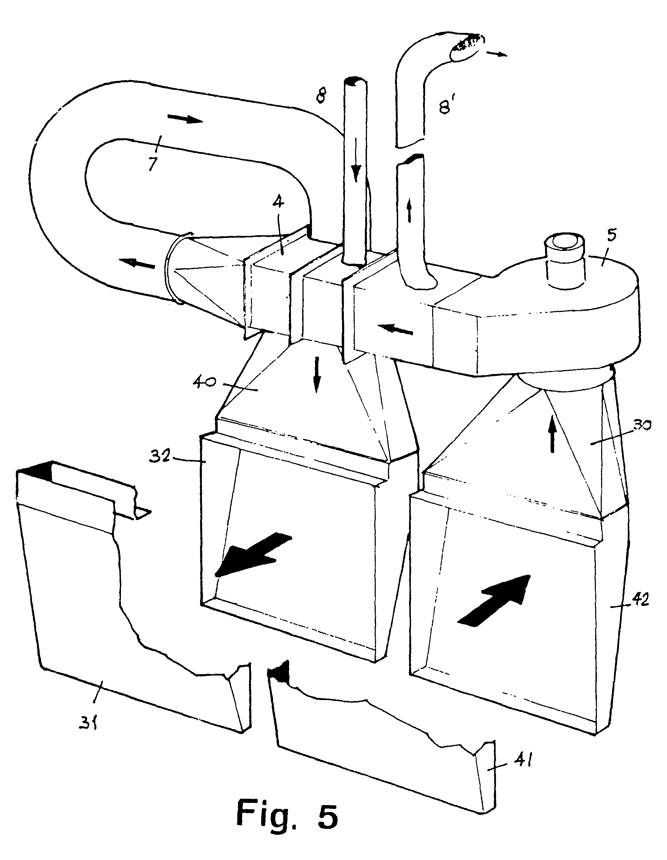

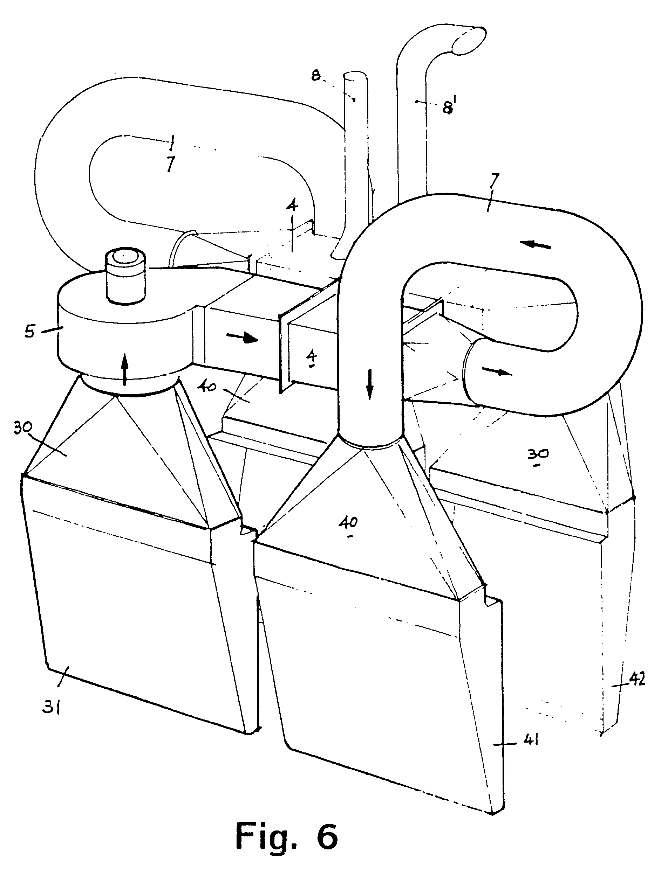

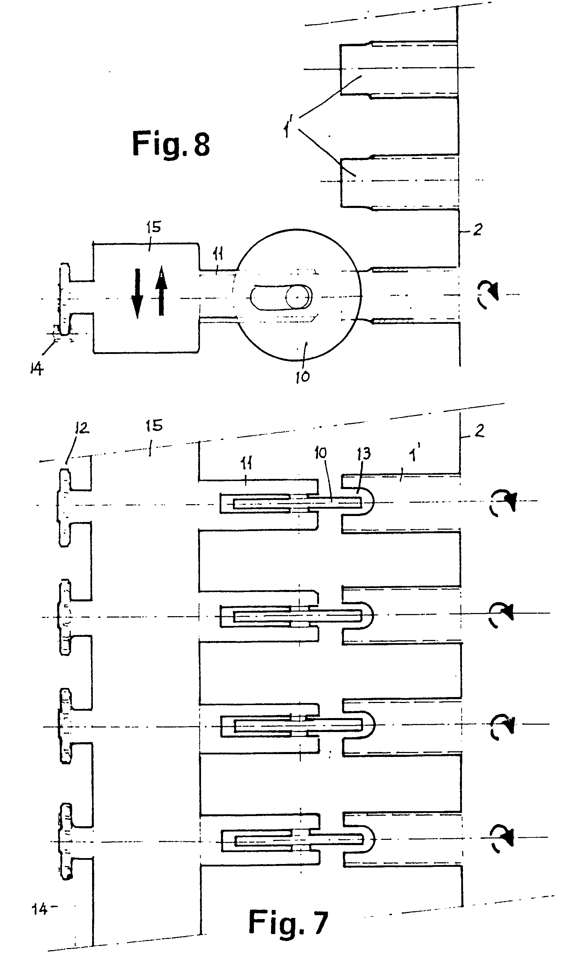

La figure 1 représente, vu dans son plan, un séchoir à deux chambres, réalisé conformément à la présente invention; la figure 2 représente la section selon A-A de la figure 1; la figure 2 BIS représente la section partielle selon A-A de la figure 1 avec le détail des portes pour le séchoir de la figure 1; la figure 3 représente la section selon B-B de la figure 1; la figure 4 représente, en prospective, ledit système complet d'air; les figures 7 et 8 représentent, en plan et en vue latérale le détail d'un mecanisme pour l'animation du transporteur à rouleaux, à plusieurs niveaux, pour le séchoir de la figure 1.

Un séchoir conforme à la présente invention et tel qu'il est représenté dans les dessins ci-joints comprend:

– un transporteur continu 1 à plusieurs voies à rouleaux 1', voies disposées horizontalement et superposées, c'est-à-dire à plusieurs niveaux, fixé sur une structure portante 2, ouverte de tous côtés pour permettre, respectivement, le passage des produits dans le sens d'avancement du transporteur 1 et le passage de l'air de séchage en direction transversale par rapport au sens d'avancement du transporteur 1; les rouleaux 1' qui composent la même voie, c'est-à-dire le niveau, du transporteur 1 sont commandés pour leur rotation, de manière simultanée, au moyen des arbres correspondants 11 montés en ligne, sur deux supports 15 horizontaux et avec l'interposition de disques 10 correspondants, montés fous sur une extrémité desdits arbres 11 et pouvant être insérés dans les fentes correspondantes 13 desdits rouleaux 1'; l'autre extrémité desdits arbres 11 est munie d'un pignon 12, et une chaîne dentée 14, asservie à un organe moteur, non représenté sur le dessin püar souci de simplification, entoure tous les pignons 12 du même support 15; lesdits supports 15 peuvent être déplacés verticalement pour permettre d'actionner les rouleaux 1' de la seule voie, c'est-à-dire du niveau, du transporteur 1 qui à son tour est intéressé au chargement et au déchargement des produits;

– une bande transporteuse continue 23, placée à l'entrée de la chambre 3 et pouvant être déplacée verticalement, par des moyens connus, pour permettre le chargement des produits 9 à sécher, de manière successive sur les diverses voies, c'est-à-dire sur les niveaux, du transporteur 1 en correspondance avec la prèmiere chambre 3: à ladite bande transporteuse 23 est associé un des supports 15 précités;

– une bande transporteuse continue 24 placée à la sortie de la chambre 4, pouvant être déplacée verticalement par des moyens connus, pour recueillir les produits séchés 9", qui sont déchargés des diverses voies, c'est-à-dire des niveaux, du transporteur 1 en correspondance avec la seconde chambre 4 et de manière que le chargement des produits à sécher 9 et le déchargement des produits séchés 9" ait lieu simultanément et automatiquement par une même voie, c'est-à-dire par un niveau, du transporteur 1: à ladite bande transporteuse 24 est associé l'autre desdits supports 15;

– deux chambres 3, 4 délimitées par les casques correspondants antérieurs 31, 41 fixes et les casques postérieurs 32, 42 fixes, par des portes transversales 33, 43 mobiles verticalement et par les hottes correspondantes 30, 40 respectivement aspirantes et soufflantes pour l'air de séchage: plus particulièrement, lesdits casques aspirants 31, 42 des chambres 3, 4 sont pourvus de trous pour le passage des rouleaux correspondants 1' du transporteur 1 et lesdites portes 33, 43 sont à éléments coulissant verticalement, à commande desdites bandes transporteuses 23, 24 de sorte qu'ils laissent passer les produits en correspondance avec le niveau du transporteur 1, immédiatement mis en fonction;

– une installation en circuit fermé pour l'animation de l'air de séchage avec parcours en zigzag dans les chambres 3, 4 avec deux ventilateurs 5 aspirants et refoulants placés en tête des hottes 30 aspirantes, deux réchaufferus 4, à bruleur ou d'un autre type, disposés en cascade par rapport auxdits ventilateurs 5, deux parcours 7 d'envoi de l'air des ventilateurs 5 vers les hottes soufflantes 40, une prise 8 pour l'air sec, ambiant, et un échappement 8' poiur l'air consommé et froid: l'air chaud qui sort des casques 32, 41 traverse transversalement les chambres 3, 4 léchant les produits 9' se trouvant sur tous les niveaux de transporteur 1 et sort par casques 31, 42.

Le fonctionnement est le suivant. Le chargement, déchargement des produits 9,9" a lieu au moyen des bandes 23, 24 de haut en bas ou inversément, de la structure 2, c'est-à-dire que se charge et se décharge une voie, c'est-à-dire un niveau, après l'autre, du transporteur 1 à partier de celui plus en haut, bas jusqu'à celui qui se trouve plus en bas, haut; une fois chargé et déchargé le niveau le plus bas, haut du transporteur 1, les bandes transporteuses 23, 24 se trouvent à nouveau en position en face de la voie, c'est-à-dire du niveau, le plus haut, bas et ainsi de suite pour chaque cycle opératif.

Durant le chargement, dans la première chambre 3, des produits 9 à sécher, les produits 9' qui se trouvent, dans ladite chambre 3, sur la même voie, c'est-à-dire au même niveau, du transporteur 1 et qui sont partiellement séchés, sont, par l'effet du mouvement-même des rouleaux 1' composant ladite voie, c'est-à-dire le niveau, du transporteur 1, transférés dans la seconde chambre 4 et simultanément, les produits 9" qui se trouvent sur la même voie, c'est-à-dire au même niveau, du transporteur 1 dans ladite chambre 4 et qui sont complètement séchés, sont déchargés sur la bande de récolte 24. La durée totale de permanence des produits dans chacune des chambres de séchage tout comme le rapport entre la température de l'air et l'humidité relative contenue dans les produits peuvent être réglés différemment pour chaque chambre en relation avec les caractéristiques des produits en conséquence de quoi il est possible, conformément à l'invention, de faire en sorte que le chargement et le déchargement des produits, de même que l'avancement des produits de trouvant dans les diverses chambres, aient lieu selon un parcours équivalent à une fraction, par ex. la moitié, de la longueur de la première chambre; de même qu'il est possible de donner à l'air une température maximale dans la dernière chambre et une température minimale dans la prémière chambre, en obtenant ainsi un avancement des produits à contrecourant.

## Revendications

1. Séchoir rapide pour céramique, spécialement pour carreaux en céramique, comprenant plusieurs chambres (3, 4) contigues horizontalement, avec un transporteur continu (1) à plusieurs voies à rouleaux horizontales superposées, c'est-à-dire à plusieurs niveaux, étendus auxdites chambres (3, 4) et dont les niveaux sont mis en foction seulement un à un, successivement de manière cyclique, des moyens (23, 24) pour le chargement, déchargement des produits (9, 9″) ou regard du niveau du transporteur (1) qui à chaque fois est mis en fonction, une installation pour l'animation de l'air chaud de séchage traversant les chambres transversalement, caractérisé par le fait que ledit air de séchage est conduit en circuit fermé traversant les chambres (3, 4) avec un parcours en zigzag, et par le fait que ledits rouleaux (1'), qui sortent d'une des parois des chambres (3, 4) ont des extrémités profilées à fourchette (13) pour permettre leur animation au moyen de disques (10) reliés à des arbres moteurs correspondant (11), montés sur un support (15).

2. Séchoir selon la revendication 1, caractérisé par le fait que lesdites chambres (3, 4) sont délimitées par des casques correspondants antérieurs (31, 41) et postérieurs (32, 42) fixes et pourvues dans leur partie supérieure de hottes respectivement aspirantes (30) et soufflantes (40) pour l'air de séchage et d'au moins deux portes (33, 43) transversales, à éléments horizontaux coulissants, mobiles verticalement pour permettre le passage des produits en correspondance avec le niveau en fonction du transporteur (1).

3. Séchoir selon la revendication 1, caractérisé par le fait qui lesdits moyen (23, 24) pour le chargement, déchargement des produits (9, 9″) sont en mesure de servir en même temps le même niveau et, dans le même ordre successif cyclique, tous les niveaux dudit transporteur (1).

4. Séchoir selon la revendication 3, caractérisé par le fait qu'auxdits (23, 24) pour le chargement, déchargement des produits (9, 9″) est associé un desdits supports (15).

5. Séchoir selon la revendication 1, caractérisé par le fait que ladite installation d'animation de l'air de séchage comprend des ventilateurs (5) aspirants, refoulants et des réchauffeurs (6) pour permettre de régler la température et l'humidité de l'air distribué dans les différentes chambres (3, 4).

## Patentansprüche

1. Schnelltrockner für Keramik, insbesondere für keramische Fliesen, mit mehreren horizontal benachbarten Kammern (3, 4), mit einem kontinuierlichen Förderer (1) in mehreren übereinanderliegenden, sich in den Kammern (3, 4) erstreckenden Horizontalwalzenbahnen, d.h. in mehreren Ebenen, die nur einzeln nacheinander zyklisch in Funktion gesetzt werden, mit Einrichtungen (23, 24) für Be- und Entladung an Produkten (9, 9″) auf die Ebene des Förderers (1), die jeweils in Funktion steht, mit einer Anordnung für die Erzeugung warmer Trocknungsluft, die die Kammer quer durchströmt, dadurch gekennzeichnet, daß die Trocknungsluft im geschlossenen, die Kammern (3, 4) in Zick-Zack-Bahn durchsetzenden Kreis geführt ist und daß die Walzen (1'), die aus einer der Wände der Kammern (3, 4) austreten, gabelförmige, profilierte Enden (13) haben, um ihre Bewegung mittels Scheiben (10) zu gestatten, die mit entsprechenden Motorwellen (11) verbunden sind, die auf einem Träger (15) angeordnet sind.

2. Trockner nach Anspruch 1, dadurch gekennzeichnet, daß die Kammern (3, 4) durch entsprechende vordere (31, 41) und hintere (32, 42) feste Abdeckungen begrenzt sind, die in ihrem oberen Teil mit Saug- (30) bzw. Blashauben (40) für die Trocknungsluft und wenigstens zwei Queröffnungen (33, 43) mit verschieblichen, horizontal beweglichen Elementen versehen sind, um den Durchtritt der Produkte in Übereinstimmung mit der Ebene des Förderers (1) zu gestatten.

3. Trockner nach Anspruch 1, dadurch gekennzeichnet, daß die Einrichtungen (23, 24) für die Be- und Entladung der Produkte (9, 9″) so ausgebildet sind, daß sie gleichzeitig die gleiche Ebene und in der gleichen aufeinanderfolgenden zyklischen Ordnung alle Ebenen des Förderers (1) bedienen können.

4. Trockner nach Anspruch 3, dadurch gekennzeichnet, daß diesen Einrichtungen (23, 24) für die Be- und Entladung der Produkte (9, 9″) einer der Träger (15) zugeordnet ist.

5. Trockner nach Anspruch 1, dadurch gekennzeichnet, daß die Anordnung für die Erzeugung der Trocknungsluft Saug- und Druckventilatoren und Vorwärmer (6) umfassen, um die Temperatur und die Feuchte der in die verschiedenen Kammern (3, 4) verteilten Luft regeln zu können.

## Claims

1. A fast drier for ceramics, particularly for ceramic floor tiles, comprising a plurality of horizontally adjacent chambers (3, 4), a continuous conveyor (1) providing a plurality of superimposed horizontal pathways of horizontal rollers spanning the chambers (3, 4), i.e. at a plurality of levels, the levels being put in operation only one after another successively in a cyclic manner, means (23, 24) for charging and discharging products (9, 9″) in relation to a level of the conveyor (1) each time it is made operational, and apparatus for the activation of heated drying air to pass transversely across the chambers, characterised by the fact that the said drying air is conducted in a closed circuit across the chambers (3, 4) along a zig-zag route and by the fact that the said rollers (1'), where they pass out of walls of the chambers (3, 4), have ends shaped as forks (13) to permit their actuation by disc means (10) connected to the shafts of corresponding motors (11) mounted on a support (15).

2. A drier according to claim 1, characterised by the fact that the said chambers (3, 4) are bounded in front (31, 41) and behind (32, 42) by fixed covers equipped in their upper parts with hoods respectively for drawing out (30) and blowing in (40) the drying air and at least two doors (33, 34), transverse to the horizontally moving elements, the doors being movable vertically to permit passage of the products in accordance with the level of the conveyor (1) which is operational.

3. A drier according to claim 1, characterised by the fact that the said means (23, 24) for charging and discharging the products (9, 9") are adapted to service at the same time the same level and, in the same successive cyclic order, all the levels of the conveyor (1).

4. A drier according to claim 3, characterised by the fact that the arrangement (23, 24) for charging and discharging the products (9, 9") is associated with one of the supports (15).

5. A drier according to claim 1, characterised by the fact that the said apparatus for activating drying air comprises suction fans (5) for recycling and reheating (6) to permit regulation of the temperature and humidity of the air distributed through the various chambers (3, 4).

EP 0195878 B1

# Fig. 1

# Fig. 2

7

Fig. 2 BIS

Fig. 3

Fig. 4

Fig. 5

Fig. 6

Fig. 8

Fig. 7